# EUROPÄISCHE PATENTSCHRIFT

(11) **EP 4 191 469 B1**
(45) Veröffentlichungstag und Bekanntmachung des Hinweises auf die Patenterteilung: **11.02.2026**
(21) Anmeldenummer: 21212482.0
(22) Anmeldetag: 06.12.2021
(51) Int. Cl.: G06F 18/214, G06F 18/21, G06F 18/24, G06V 20/56

(54) **VERFAHREN ZUM BESTIMMEN ÄHNLICHER SZENARIEN,TRAININGSVERFAHREN UND TRAININGSSTEUERGERÄT**
METHOD FOR DETERMINING SIMILAR SCENARIOS, TRAINING METHOD AND TRAINING CONTROL DEVICE
PROCÉDÉ DE DÉTERMINATION DES SCÉNARIOS SIMILAIRES, PROCÉDÉ D'APPRENTISSAGE ET APPAREIL DE COMMANDE D'APPRENTISSAGE

(43) Veröffentlichungstag der Anmeldung: 07.06.2023
(73) Patentinhaber: dSPACE GmbH, 33102 Paderborn (DE)
(72) Erfinder: Madhusudanan Nair Sheela, Harisankar, 33102 Paderborn (DE); Hasenklever, Daniel, 33102 Paderborn (DE); Nolde, Christian, 33102 Paderborn (DE); Burdorf, Sven, 33102 Paderborn (DE)

(56) Entgegenhaltungen:
- QI WANG ET AL: "Embedding Structured Contour and Location Prior in Siamesed Fully Convolutional Networks for Road Detection", ARXIV.ORG, CORNELL UNIVERSITY LIBRARY, 201 OLIN LIBRARY CORNELL UNIVERSITY ITHACA, NY 14853, 5 May 2019 (2019-05-05), XP081272318, DOI: 10.1109/TITS.2017.2749964
- SHORTEN CONNOR ET AL: "A survey on Image Data Augmentation for Deep Learning", JOURNAL OF BIG DATA, 6 July 2019 (2019-07-06), Cham, pages 1 - 48, XP055923246, Retrieved from the Internet <URL:https://journalofbigdata.springeropen.com/track/pdf/10.1186/s40537-019-0197-0.pdf> [retrieved on 20220519], DOI: 10.1186/s40537-019-0197-0
- YU HUANG ET AL: "Autonomous Driving with Deep Learning: A Survey of State-of-Art Technologies", ARXIV.ORG, CORNELL UNIVERSITY LIBRARY, 201 OLIN LIBRARY CORNELL UNIVERSITY ITHACA, NY 14853, 11 June 2020 (2020-06-11), XP081694770

## Beschreibung

Die vorliegende Erfindung betrifft ein computerimplementiertes Verfahren zum Bereitstellen eines Algorithmus maschinellen Lernens zum Bestimmen ähnlicher Szenarien auf Basis von Szenariendaten eines Datensatzes von Sensordaten.

Die vorliegende Erfindung betrifft des Weiteren ein computerimplementiertes Verfahren zum Bestimmen ähnlicher Szenarien auf Basis von Szenariendaten eines Datensatzes von Sensordaten.

Darüber hinaus betrifft die Erfindung ein Trainingssteuergerät zum Bereitstellen eines Algorithmus maschinellen Lernens zum Bestimmen ähnlicher Szenarien auf Basis von Szenariendaten eines Datensatzes von Sensordaten.

### Stand der Technik

Fahrassistenzsysteme wie z.B. ein adaptiver Geschwindigkeitsregler und/oder Funktionen für das hochautomatisierte Fahren können mithilfe diverser Überprüfungsmethoden verifiziert bzw. validiert werden. Dabei können insbesondere Simulationen verwendet werden.

Zur Erstellung von Testszenarien für Simulationen ist die Durchführung von Testfahrten erforderlich. Die hierdurch gewonnenen Sensordaten werden sodann in ein logisches Szenario abstrahiert.

Eingangsdaten sind dabei Rohdaten, also Sensordaten aus realen Messfahrten im Sinne von Aufzeichnungen von Radarechos, 3D-Punktewolken aus Lidarmessungen und Bilddaten. Ergebnisdaten sind simulierbare Fahrszenarien, die einerseits eine Umgebung und andererseits auch Trajektorien umfassen. Im Anschluss erfolgt eine Kategorisierung von Fahrmanövern in Gruppen.

QI WANG ET AL: "Embedding Structured Contour and Location Prior in Siamesed Fully Convolutional Networks for Road Detection",ARXIV.ORG, CORNELL UNIVERSITY LIBRARY, 201 OLIN LIBRARY CORNELL UNIVERSITY ITHACA, NY 14853, 5. Mai 2019 (2019-05-05), DOI: 10.1109/TITS.2017.2749964, offenbart ein siamesiches Netzwerk für die Erekennung von Straßen. T

"Szenario-Optimierung für die Absicherung von automatisierten und autonomen Fahrsystemen" (Florian Hauer, B. Holzmüller, 2019) offenbart Verfahren zur Verifikation und Validierung automatisierter und autonomer Fahrsysteme, insbesondere das Finden geeigneter Testszenarien für die virtuelle Absicherung.

Die Testmethodik sieht dabei die Adaption einer metaheuristischen Suche vor, um Szenarien zu optimieren. Hierfür muss ein passender Suchraum und eine geeignete Gütefunktion aufgestellt werden. Ausgehend von einer abstrakten Beschreibung der Funktionalität und Anwendungsfälle des Systems werden parametrisierte Szenarien abgeleitet.

Deren Parameter spannen einen Suchraum auf, aus dem die passenden Szenarien zu identifizieren sind. Das Generieren von Szenarien ist jedoch rechenintensiv. Es besteht daher ein Interesse daran, die Zahl der Generierungsvorgänge zu minimieren und auf relevante Szenarien zu beschränken. Relevante Szenarien umfassen dabei beispielsweise Szenarien, die noch nicht oder nicht in ausreichender Zahl als simulierbares Szenario verfügbar sind.

Demzufolge besteht ein Bedarf, bestehende Verfahren zum Bestimmen ähnlicher Szenarien auf Basis von Szenariendaten eines Datensatzes von Sensordaten dahingehend zu verbessern, dass ein Identifizieren relevanter Szenarien unter Verwendung geringerer Rechenressourcen ermöglicht wird.

Es ist daher Aufgabe der Erfindung, ein effizienteres Verfahren zum Bestimmen ähnlicher Szenarien auf Basis von Szenariendaten eines Datensatzes von Sensordaten bereitzustellen.

### Offenbarung der Erfindung

Die Aufgabe wird erfindungsgemäß durch ein computerimplementiertes Verfahren zum Bereitstellen eines Algorithmus maschinellen Lernens zum Bestimmen ähnlicher Szenarien auf Basis von Szenariendaten eines Datensatzes von Sensordaten mit den Merkmalen des Patentanspruchs 1 gelöst.

Die Aufgabe wird erfindungsgemäß des Weiteren durch ein computerimplementiertes Verfahren zum Bestimmen ähnlicher Szenarien auf Basis von Szenariendaten eines Datensatzes von Sensordaten mit den Merkmalen des Patentanspruchs 12 gelöst.

Die Aufgabe wird erfindungsgemäß ferner durch ein Trainingssteuergerät zum Bereitstellen eines Algorithmus maschinellen Lernens zum Bestimmen ähnlicher Szenarien auf Basis von Szenariendaten eines Datensatzes von Sensordaten mit den Merkmalen des Patentanspruchs 13 gelöst.

Darüber hinaus wird die Aufgabe durch ein Computerprogramm mit Programmcode, um das erfindungsgemäße Verfahren durchzuführen, wenn das Computerprogramm auf einem Computer ausgeführt wird, mit den Merkmalen des Patentanspruchs 14 gelöst.

Die Erfindung betrifft ein computerimplementiertes Verfahren zum Bereitstellen eines Algorithmus maschinellen Lernens zum Bestimmen ähnlicher Szenarien auf Basis von Szenariendaten eines Datensatzes von Sensordaten.

Das Verfahren umfasst ein Bereitstellen des Datensatzes von Sensordaten einer durch eine Mehrzahl fahrzeugseitiger Umfelderkennungsensoren erfassten Fahrt eines Ego-Fahrzeugs und ein Erzeugen einer ersten Augmentation des Datensatzes von Sensordaten und einer sich von der ersten Augmentation unterscheidenden zweiten Augmentation des Datensatzes von Sensordaten.

Des Weiteren umfasst das Verfahren ein Anwenden eines ersten Algorithmus maschinellen Lernens auf die erste Augmentation des Datensatzes von Sensordaten zum Erzeugen einer, insbesondere dimensionsreduzierten, Merkmalsrepräsentation der ersten Augmentation des Datensatzes von Sensordaten und zum Bestimmen einer ersten Klasse eines von der ersten Augmentation des Datensatzes von Sensordaten umfassten Szenarios.

Darüber hinaus umfasst das Verfahren ein Anwenden eines zweiten Algorithmus maschinellen Lernens auf die zweite Augmentation des Datensatzes von Sensordaten zum Erzeugen einer, insbesondere dimensionsreduzierten, Merkmalsrepräsentation der zweiten Augmentation des Datensatzes von Sensordaten und zum Bestimmen einer zweiten Klasse eines von der zweiten Augmentation des Datensatzes von Sensordaten umfassten Szenarios.

Das Verfahren umfasst ferner ein Anwenden eines Optimierungsalgorithmus auf die durch den ersten Algorithmus maschinellen Lernens ausgegebene Merkmalsrepräsentation der ersten Augmentation des Datensatzes von Sensordaten, wobei der Optimierungsalgorithmus die durch den zweiten Algorithmus maschinellen Lernens ausgegebene Merkmalsrepräsentation der zweiten Augmentation des Datensatzes von Sensordaten approximiert.

Die Erfindung betrifft ferner ein computerimplementiertes Verfahren zum Bestimmen ähnlicher Szenarien auf Basis von Szenariendaten eines Datensatzes von Sensordaten.

Das Verfahren umfasst ein Bereitstellen des Datensatzes von Sensordaten einer durch eine Mehrzahl fahrzeugseitiger Umfelderkennungsensoren erfassten Fahrt eines Ego-Fahrzeugs, und ein Anwenden des erfindungsgemäß trainierten Algorithmus maschinellen Lernens auf den Datensatz von Sensordaten zum Bestimmen, insbesondere Clustern, ähnlicher Szenarien.

Die Erfindung betrifft darüber hinaus ein Trainingssteuergerät zum Bereitstellen eines Algorithmus maschinellen Lernens zum Bestimmen ähnlicher Szenarien auf Basis von Szenariendaten eines Datensatzes von Sensordaten.

Das Trainingssteuergerät weist Mittel zum Empfangen des Datensatzes von Sensordaten einer durch eine Mehrzahl fahrzeugseitiger Umfelderkennungsensoren erfassten Fahrt eines Ego-Fahrzeugs sowie Mittel zum Erzeugen einer ersten Augmentation des Datensatzes von Sensordaten und einer sich von der ersten Augmentation unterscheidenden zweiten Augmentation des Datensatzes von Sensordaten auf.

Des Weiteren weist das Trainingssteuergerät Mittel zum Anwenden eines ersten Algorithmus maschinellen Lernens auf die erste Augmentation des Datensatzes von Sensordaten zum Erzeugen einer, insbesondere dimensionsreduzierten, Merkmalsrepräsentation der ersten Augmentation des Datensatzes von Sensordaten und zum Bestimmen einer ersten Klasse eines von der ersten Augmentation des Datensatzes von Sensordaten umfassten Szenarios auf.

Das Trainingssteuergerät weist ferner Mittel zum Anwenden eines zweiten Algorithmus maschinellen Lernens auf die zweite Augmentation des Datensatzes von Sensordaten zum Erzeugen einer, insbesondere dimensionsreduzierten, Merkmalsrepräsentation der zweiten Augmentation des Datensatzes von Sensordaten und zum Bestimmen einer zweiten Klasse eines von der zweiten Augmentation des Datensatzes von Sensordaten umfassten Szenarios auf.

Überdies weist das Trainingssteuergerät Mittel zum Anwenden eines Optimierungsalgorithmus auf die durch den ersten Algorithmus maschinellen Lernens ausgegebene Merkmalsrepräsentation der ersten Augmentation des Datensatzes von Sensordaten auf, wobei der Optimierungsalgorithmus die durch den zweiten Algorithmus maschinellen Lernens ausgegebene Merkmalsrepräsentation der zweiten Augmentation des Datensatzes von Sensordaten approximiert.

Die Erfindung betrifft des Weiteren ein Computerprogramm mit Programmcode, um das erfindungsgemäße Verfahren durchzuführen, wenn das Computerprogramm auf einem Computer ausgeführt wird.

Eine Idee der vorliegenden Erfindung ist es, das Problem der Identifizierung ähnlicher Manöver/Interaktionsmanöver-Cluster aus Trajektorien und Kartendaten in einem sequenziellen Datensatz unter Verwendung von Algorithmen maschinellen Lernens zu lösen.

Insbesondere können Kartendaten von den Algorithmen maschinellen Lernens genutzt werden, um Merkmalsdarstellungen der Trajektorien und Kartendaten zu lernen.

Diese gelernte Merkmalsdarstellung kann von einem Clustering-Algorithmus verwendet werden, um die Trajektorienmerkmale auf der Grundlage verschiedener Manöver zu gruppieren. Dieser kann beispielsweise die Trajektorienmerkmale des Ego-Fahrzeugs und die eines nahe gelegenen Objekts verwenden, um Szenarien auf der Grundlage des Interaktionsmanövers zu gruppieren.

Die Algorithmen maschinellen Lernens lernen dabei Repräsentationsmerkmale des Interaktionsmanövers aus der Trajektorie des Ego-Fahrzeugs, der Trajektorie des Objekts, mit dem das Ego-Fahrzeug interagiert, und der Fahrbahninformationen entweder als Kartendaten oder kodiert in Fahrzeugtrajektorien in selbstüberwachter Weise.

Das trainierte Modell wird sodann verwendet, um Merkmalsvektor-Darstellungen von Interaktionsmanövern aus einem unbekannten (Test-)Datensatz zu erzeugen. Die generierten Merkmalsvektoren werden später für das Clustering ähnlicher Interaktionsmanöver verwendet.

Es wird eine erste Augmentation erstellt, welche an den ersten Algorithmus maschinellen Lernens übertragen wird und eine zweite Augmentation der Eingabedaten erstellt, welche an den zweiten Algorithmus maschinellen Lernens übertragen wird. Die Encoder bzw. Kodierer kodieren dabei die Informationen in niederdimensionale Merkmalsvektoren.

Für die Ausgaben der beiden Netze wird ein Ähnlichkeitsverlust berechnet, der während des Trainings zu minimieren ist. Dadurch werden die Encoder gezwungen, wichtige Merkmale zu lernen, die ähnliche Interaktionsmanöver unterscheiden können.

Die trainierten Encoder können verwendet werden, um Merkmalsvektoren für alle Trajektorien zu generieren, die die Interaktionsmanöver im Datensatz darstellen. Diese wiederum können durch einen Clustering-Algorithmus, wie z.B. hierarchisches Clustering, geclustert werden, um Interaktionsgruppen im Datensatz zu bilden.

Algorithmen des maschinellen Lernens basieren darauf, dass Verfahren der Statistik verwendet werden, um eine Datenverarbeitungsanlage derart zu trainieren, dass diese eine bestimmte Aufgabe ausführen kann, ohne dass diese ursprünglich explizit hierzu programmiert wurde. Das Ziel des maschinellen Lernens besteht dabei darin, Algorithmen zu konstruieren, die aus Daten lernen und Vorhersagen treffen können. Diese Algorithmen erstellen mathematische Modelle, mit denen beispielsweise Daten klassifiziert werden können.

Der Fachmann versteht unter einer dimensionsreduzierten Merkmalsrepräsentation die Transformation von Daten aus einem hochdimensionalen Raum in einen niedrigdimensionalen Raum, so dass die niedrigdimensionale Darstellung einige sinnvolle Eigenschaften der ursprünglichen Daten beibehält, idealerweise nahe an ihrer intrinsischen Dimension. Weitere Ausführungsformen der vorliegenden Erfindung sind Gegenstand der weiteren Unteransprüche und der nachfolgenden Beschreibung unter Bezugnahme auf die Figuren.

Gemäß einer bevorzugten Weiterbildung der Erfindung ist vorgesehen, dass ein Ähnlichkeitsverlust zwischen der durch den ersten Algorithmus maschinellen Lernens ausgegebenen ersten Klasse des von der ersten Augmentation des Datensatzes von Sensordaten umfassten Szenarios und der durch den zweiten Algorithmus maschinellen Lernens ausgegebenen zweiten Klasse des von der zweiten Augmentation des Datensatzes von Sensordaten umfassten Szenarios durch den Optimierungsalgorithmus minimiert wird. Dies zwingt die Encoder, Merkmale zu lernen, die ähnliche Interaktionsmanöver unterscheiden können.

Gemäß einer weiteren bevorzugten Weiterbildung der Erfindung ist vorgesehen, dass der erste Algorithmus maschinellen Lernens einen ersten Encoder, welcher Trajektorien- und/oder Geschwindigkeitsdaten des Ego-Fahrzeugs der ersten Augmentation des Datensatzes von Sensordaten empfängt, einen zweiten Encoder, welcher Trajektorien-, Geschwindigkeits- und/oder Klassen-ID-Daten zumindest eines Objekts der ersten Augmentation des Datensatzes von Sensordaten empfängt und einen dritten Encoder, welcher Fahrbahninformationen der ersten Augmentation des Datensatzes von Sensordaten empfängt, aufweist. Somit kann in vorteilhafter Weise eine dimensionsreduzierte Merkmalsrepräsentation der ersten Augmentation des Datensatzes von Sensordaten generiert werden.

Gemäß einer weiteren bevorzugten Weiterbildung der Erfindung ist vorgesehen, dass der zweite Algorithmus maschinellen Lernens einen vierten Encoder, welcher Trajektorien- und/oder Geschwindigkeitsdaten des Ego-Fahrzeugs der zweiten Augmentation des Datensatzes von Sensordaten empfängt, einen fünften Encoder, welcher Trajektorien-, Geschwindigkeits- und/oder Klassen-ID-Daten zumindest eines Objekts der zweiten Augmentation des Datensatzes von Sensordaten empfängt und einen sechsten Encoder, welcher Fahrbahninformationen der zweiten Augmentation des Datensatzes von Sensordaten empfängt, aufweist. Somit kann in vorteilhafter Weise eine dimensionsreduzierte Merkmalsrepräsentation der zweiten Augmentation des Datensatzes von Sensordaten generiert werden.

Gemäß einer weiteren bevorzugten Weiterbildung der Erfindung ist vorgesehen, dass der erste Encoder, der zweite Encoder und der dritte Encoder jeweils einen Merkmalsvektor ausgeben, welche zu einem ersten Merkmalsvektor konkateniert werden, und wobei der vierte Encoder, der fünfte Encoder und der sechste Encoder jeweils einen Merkmalsvektor ausgeben, welche zu einem zweiten Merkmalsvektor konkateniert werden. Somit kann in vorteilhafter Weise eine kombinierte Repräsentation sämtlicher Eingangsdaten der jeweiligen Encoder-Netze erzeugt werden.

Gemäß einer weiteren bevorzugten Weiterbildung der Erfindung ist vorgesehen, dass der erste Algorithmus maschinellen Lernens die erste Klasse des von der ersten Augmentation des Datensatzes von Sensordaten umfassten Szenarios unter Verwendung des konkatenierten ersten Merkmalsvektors bestimmt, und wobei der zweite Algorithmus maschinellen Lernens die zweite Klasse des von der zweiten Augmentation des Datensatzes von Sensordaten umfassten Szenarios unter Verwendung des konkatenierten zweiten Merkmalsvektors bestimmt. Somit kann in vorteilhafter Weise eine kombinierte Repräsentation sämtlicher Eingangsdaten der jeweiligen Encoder-Netze erzeugt werden.

Gemäß einer weiteren bevorzugten Weiterbildung der Erfindung ist vorgesehen, dass der erste bis sechste Encoder LSTM-Schichten aufweisen.

Die LSTM-Schichten eignen sich in vorteilhafter Weise besser für Trajektoriendaten im Gegensatz zu 2D-Faltungsschichten für Bilddaten. Die Karteninformationen können dem jeweiligen Encoder-Netz entweder explizit oder implizit als kodierte Informationen zusammen mit den Trajektorien zur Verfügung gestellt werden.

Gemäß einer weiteren bevorzugten Weiterbildung der Erfindung ist vorgesehen, dass von dem Datensatz von Sensordaten umfasste Trajektoriendaten des Ego-Fahrzeugs und/oder des Objekts in Abhängigkeit einer Anzahl von Zeitschritten, in denen sich das Objekt in einem Erfassungsbereich der Mehrzahl fahrzeugseitiger Umfelderkennungsensoren befindet, jeweils eine unterschiedliche Merkmalsgröße aufweisen.

Somit kann in vorteilhafter Weise eine Zeitdauer, während welcher sich das Ego-Fahrzeug und/oder das Objekt in dem Erfassungsbereich der Mehrzahl fahrzeugseitiger Umfelderkennungsensoren befindet in einer jeweils unterschiedlichen Merkmalsrepräsentation ausgedrückt werden.

Gemäß einer weiteren bevorzugten Weiterbildung der Erfindung ist vorgesehen, dass der erste Algorithmus maschinellen Lernens und der zweite Algorithmus maschinellen Lernens zur Verarbeitung der von dem Datensatz von Sensordaten umfassten Trajektoriendaten des Ego-Fahrzeugs und/oder des Objekts Ragged-Tensoren verwenden.

Die Merkmalsgröße von Trajektorien hängt von der Anzahl der Zeitschritte ab, in denen sich das Objekt im Bereich der Ego-Fahrzeugsensoren befand. Da diese Dauer von vielen Faktoren beeinflusst werden kann, haben jede Trajektorie und die zugehörigen Karteninformationen eine andere Merkmalsgröße, was berücksichtigt werden muss. Dies erfordert die Verwendung von Ragged-Tensoren (Tensoren mit einer unterschiedlichen Anzahl von Elementen in jeder Dimension).

Gemäß einer weiteren bevorzugten Weiterbildung der Erfindung ist vorgesehen, dass die erste Augmentation und die zweite Augmentation zum Erstellen unterschiedlicher Varianten des Datensatzes von Sensordaten zufällig erzeugt sind. Dadurch kann in vorteilhafter Weise eine effektive Abdeckung eines Zustandsraums erreicht werden, welcher die Parameter der jeweiligen Datensätze umfasst.

Gemäß einer weiteren bevorzugten Weiterbildung der Erfindung ist vorgesehen, dass die Szenarien Fahrmanöver des Ego-Fahrzeugs und/oder eines Fellow-Fahrzeugs und/oder Interaktionsmanöver des Ego-Fahrzeugs mit dem Fellow-Fahrzeug und/oder weiterer Objekte aufweisen.

Die trainierten Encoder können somit dazu verwendet werden, Merkmalsvektoren für alle Trajektorien zu generieren, die die Interaktionsmanöver im Datensatz darstellen. Diese können durch einen Clustering-Algorithmus, wie z.B. hierarchisches Clustering, geclustert werden, um Interaktionsgruppen im Datensatz zu bilden.

Gemäß einer weiteren bevorzugten Weiterbildung der Erfindung ist vorgesehen, dass die Trajektorien- und/oder Geschwindigkeitsdaten des Ego-Fahrzeugs durch einen GPS-Sensor erfasst werden, und wobei die Trajektorien-, Geschwindigkeits- und/oder Klassen-ID-Daten des zumindest eines Objekts sowie die Fahrbahninformationen durch einen Kamera-, LiDAR- und/oder Radarsensor erfasst werden.

Die Algorithmen maschinellen Lernens verarbeiten somit in vorteilhafter Weise Daten unterschiedlicher Sensorenarten, um ähnliche Szenarien auf Basis der Szenariendaten des Datensatzes von Sensordaten zu erzeugen.

Die hierin beschriebenen Merkmale des Verfahrens zum Bereitstellen eines Algorithmus maschinellen Lernens zum Bestimmen ähnlicher Szenarien auf Basis von Szenariendaten eines Datensatzes von Sensordaten sind ebenso auf das erfindungsgemäße Verfahren zum Bestimmen ähnlicher Szenarien auf Basis von Szenariendaten eines Datensatzes von Sensordaten und/oder das Trainingssteuergerät und umgekehrt anwendbar.

### Kurze Beschreibung der Zeichnungen

Zum besseren Verständnis der vorliegenden Erfindung und ihrer Vorteile wird nun auf die nachfolgende Beschreibung in Verbindung mit den zugehörigen Zeichnungen verwiesen.

Nachfolgend wird die Erfindung anhand exemplarischer Ausführungsformen näher erläutert, die in den schematischen Abbildungen der Zeichnungen angegeben sind.

Es zeigen:
- Fig. 1: ein Ablaufdiagramm eines computerimplementierten Verfahrens zum Bereitstellen eines Algorithmus maschinellen Lernens zum Bestimmen ähnlicher Szenarien auf Basis von Szenariendaten eines Datensatzes von Sensordaten gemäß einer bevorzugten Ausführungsform der Erfindung;
- Fig.2: ein Ablaufdiagramm eines Verfahrens zum Bestimmen ähnlicher Szenarien auf Basis von Szenariendaten eines Datensatzes von Sensordaten gemäß der bevorzugten Ausführungsform der Erfindung; und
- Fig.3: ein Trainingssteuergerät zum Bereitstellen eines Algorithmus maschinellen Lernens zum Bestimmen ähnlicher Szenarien auf Basis von Szenariendaten eines Datensatzes von Sensordaten gemäß der bevorzugten Ausführungsform der Erfindung.

Sofern nicht anders angegeben, bezeichnen gleiche Bezugszeichen gleiche Elemente der Zeichnungen.

### Ausführliche Beschreibung der Ausführungsformen

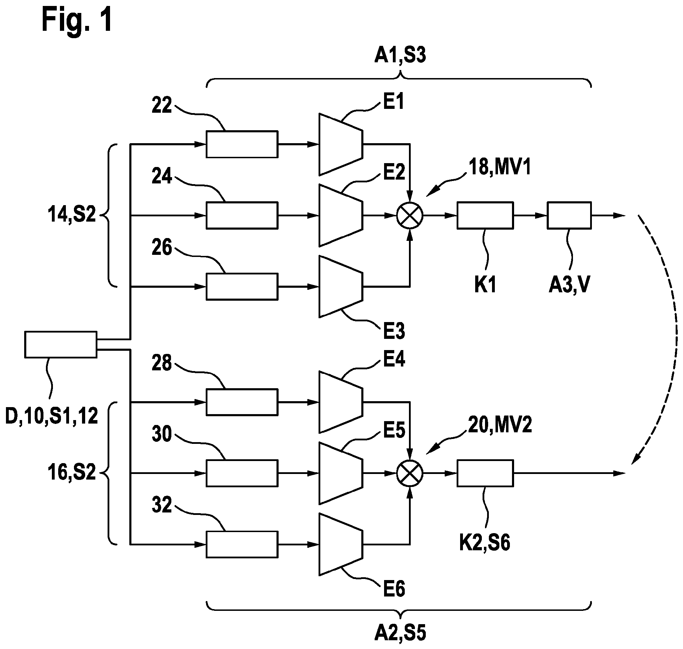

Das in Fig. 1 gezeigte Verfahren zum Bereitstellen eines Algorithmus maschinellen Lernens zum Bestimmen ähnlicher Szenarien auf Basis von Szenariendaten eines Datensatzes D von Sensordaten umfasst ein Bereitstellen S1 des Datensatzes D von Sensordaten einer durch eine Mehrzahl fahrzeugseitiger Umfelderkennungsensoren 10 erfassten Fahrt eines Ego-Fahrzeugs 12.

Das Verfahren umfasst des Weiteren ein Erzeugen S2 einer ersten Augmentation 14 des Datensatzes D von Sensordaten und einer sich von der ersten Augmentation 14 unterscheidenden zweiten Augmentation 16 des Datensatzes D von Sensordaten und ein Anwenden S3 eines ersten Algorithmus maschinellen Lernens A1 auf die erste Augmentation 14 des Datensatzes D von Sensordaten zum Erzeugen einer, insbesondere dimensionsreduzierten, Merkmalsrepräsentation 18 der ersten Augmentation 14 des Datensatzes D von Sensordaten und zum Bestimmen S4 einer ersten Klasse K1 eines von der ersten Augmentation 14 des Datensatzes D von Sensordaten umfassten Szenarios.

Das Verfahren umfasst ferner ein Anwenden S5 eines zweiten Algorithmus maschinellen Lernens A2 auf die zweite Augmentation 16 des Datensatzes D von Sensordaten zum Erzeugen einer, insbesondere dimensionsreduzierten, Merkmalsrepräsentation 20 der zweiten Augmentation 16 des Datensatzes D von Sensordaten und zum Bestimmen S6 einer zweiten Klasse K2 eines von der zweiten Augmentation 16 des Datensatzes D von Sensordaten umfassten Szenarios.

Darüber hinaus umfasst das Verfahren ein Anwenden S7 eines Optimierungsalgorithmus A3 auf die durch den ersten Algorithmus maschinellen Lernens A1 ausgegebene Merkmalsrepräsentation 18 der ersten Augmentation 14 des Datensatzes D von Sensordaten, wobei der Optimierungsalgorithmus A3 die durch den zweiten Algorithmus maschinellen Lernens A2 ausgegebene Merkmalsrepräsentation 20 der zweiten Augmentation 16 des Datensatzes D von Sensordaten approximiert.

Des Weiteren wird ein Ähnlichkeitsverlust V zwischen der durch den ersten Algorithmus maschinellen Lernens A1 ausgegebenen ersten Klasse K1 des von der ersten Augmentation 14 des Datensatzes D von Sensordaten umfassten Szenarios und der durch den zweiten Algorithmus maschinellen Lernens A2 ausgegebenen zweiten Klasse K2 des von der zweiten Augmentation 16 des Datensatzes D von Sensordaten umfassten Szenarios durch den Optimierungsalgorithmus A3 minimiert.

Der erste Algorithmus maschinellen Lernens A1 weist einen ersten Encoder E1 auf, welcher Trajektorien- und/oder Geschwindigkeitsdaten 22 des Ego-Fahrzeugs 12 der ersten Augmentation 14 des Datensatzes D von Sensordaten empfängt.

Ferner weist der erste Algorithmus maschinellen Lernens A1 einen zweiten Encoder E2 auf, welcher Trajektorien-, Geschwindigkeits- und/oder Klassen-ID-Daten 24 zumindest eines Objekts der ersten Augmentation 14 des Datensatzes D von Sensordaten empfängt.

Darüber hinaus weist der erste Algorithmus maschinellen Lernens A1 und einen dritten Encoder E3 auf, welcher Fahrbahninformationen 26 der ersten Augmentation 14 des Datensatzes D von Sensordaten empfängt.

Der zweite Algorithmus maschinellen Lernens A2 weist einen vierten Encoder E4 auf, welcher Trajektorien- und/oder Geschwindigkeitsdaten 28 des Ego-Fahrzeugs 12 der zweiten Augmentation 16 des Datensatzes D von Sensordaten empfängt.

Ferner weist der zweite Algorithmus maschinellen Lernens A2 einen fünften Encoder E5 auf, welcher Trajektorien-, Geschwindigkeits- und/oder Klassen-ID-Daten 30 zumindest eines Objekts der zweiten Augmentation 16 des Datensatzes D von Sensordaten empfängt.

Darüber hinaus weist der zweite Algorithmus maschinellen Lernens A2 einen sechsten Encoder E6 auf, welcher Fahrbahninformationen 32 der zweiten Augmentation 16 des Datensatzes D von Sensordaten empfängt.

Der erste Encoder E1, der zweite Encoder E2 und der dritte Encoder E3 geben jeweils einen Merkmalsvektor aus, welche zu einem ersten Merkmalsvektor MV1 konkateniert werden. Der vierte Encoder E4, der fünfte Encoder E5 und der sechste Encoder E6 geben ebenfalls jeweils einen Merkmalsvektor aus, welche zu einem zweiten Merkmalsvektor MV2 konkateniert werden.

Der erste Algorithmus maschinellen Lernens A1 bestimmt die erste Klasse K1 des von der ersten Augmentation 14 des Datensatzes D von Sensordaten umfassten Szenarios unter Verwendung des konkatenierten ersten Merkmalsvektors MV1. Der zweite Algorithmus maschinellen Lernens A2 bestimmt die zweite Klasse K2 des von der zweiten Augmentation 16 des Datensatzes D von Sensordaten umfassten Szenarios unter Verwendung des konkatenierten zweiten Merkmalsvektors MV2. Der erste bis sechste Encoder E1-E6 weisen ferner LSTM-Schichten auf.

Von dem Datensatz D von Sensordaten umfasste Trajektoriendaten 22, 28 des Ego-Fahrzeugs 12 und/oder des Objekts weisen in Abhängigkeit einer Anzahl von Zeitschritten, in denen sich das Objekt in einem Erfassungsbereich der Mehrzahl fahrzeugseitiger Umfelderkennungsensoren 10 befindet, jeweils eine unterschiedliche Merkmalsgröße auf.

Der erste Algorithmus maschinellen Lernens A1 und der zweite Algorithmus maschinellen Lernens A2 zur Verarbeitung der von dem Datensatz D von Sensordaten umfassten Trajektoriendaten 22, 28 des Ego-Fahrzeugs 12 und/oder des Objekts verwenden des Weiteren Ragged-Tensoren. Die erste Augmentation 14 und die zweite Augmentation 16 zum Erstellen unterschiedlicher Varianten des Datensatzes D von Sensordaten sind dabei zufällig erzeugt.

Die Szenarien weisen Fahrmanöver des Ego-Fahrzeugs 12 und/oder eines Fellow-Fahrzeugs und/oder Interaktionsmanöver des Ego-Fahrzeugs 12 mit dem Fellow-Fahrzeug und/oder weiterer Objekte auf.

Die Trajektorien- und/oder Geschwindigkeitsdaten 22, 28 des Ego-Fahrzeugs 12 werden durch einen GPS-Sensor erfasst. Die Trajektorien-, Geschwindigkeits- und/oder Klassen-ID-Daten 24, 30 des zumindest eines Objekts sowie die Fahrbahninformationen werden durch einen Kamera-, LiDAR- und/oder Radarsensor erfasst.

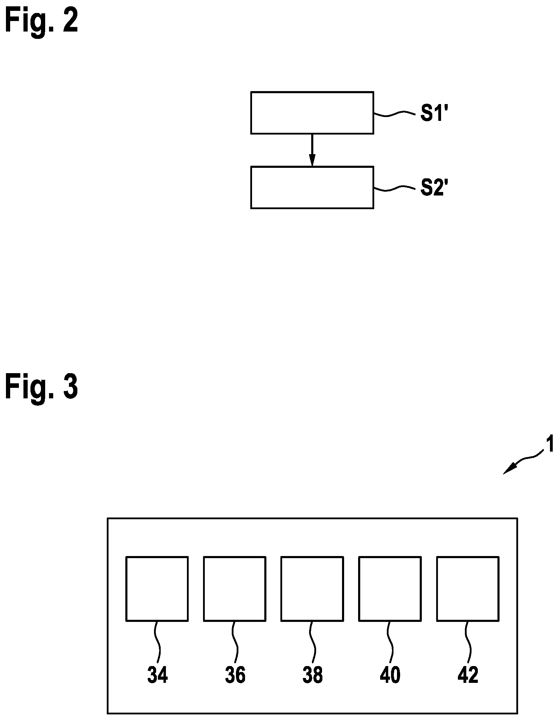

Fig.2 zeigt ein Ablaufdiagramm eines Verfahrens zum Bestimmen ähnlicher Szenarien auf Basis von Szenariendaten eines Datensatzes von Sensordaten gemäß der bevorzugten Ausführungsform der Erfindung.

Das Verfahren umfasst ein Bereitstellen S1' des Datensatzes D von Sensordaten einer durch eine Mehrzahl fahrzeugseitiger Umfelderkennungsensoren 10 erfassten Fahrt eines Ego-Fahrzeugs 12 und ein Anwenden S2` eines erfindungsgemäß trainierten Algorithmus maschinellen Lernens auf den Datensatz D von Sensordaten zum Bestimmen, insbesondere Clustern, ähnlicher Szenarien.

Fig.3 zeigt ein Trainingssteuergerät 1 zum Bereitstellen eines Algorithmus maschinellen Lernens zum Bestimmen ähnlicher Szenarien auf Basis von Szenariendaten eines Datensatzes von Sensordaten gemäß der bevorzugten Ausführungsform der Erfindung.

Das Trainingssteuergerät 1 umfasst Mittel 34 zum Empfangen des Datensatzes D von Sensordaten einer durch eine Mehrzahl fahrzeugseitiger Umfelderkennungsensoren 10 erfassten Fahrt eines Ego-Fahrzeugs 12 sowie Mittel 36 zum Erzeugen einer ersten Augmentation 14 des Datensatzes D von Sensordaten und einer sich von der ersten Augmentation 14 unterscheidenden zweiten Augmentation 16 des Datensatzes D von Sensordaten.

Des Weiteren weist das Trainingssteuergerät 1 Mittel 38 zum Anwenden eines ersten Algorithmus maschinellen Lernens A1 auf die erste Augmentation 14 des Datensatzes D von Sensordaten zum Erzeugen einer, insbesondere dimensionsreduzierten, Merkmalsrepräsentation 18 der ersten Augmentation 14 des Datensatzes D von Sensordaten und zum Bestimmen einer ersten Klasse K1 eines von der ersten Augmentation 14 des Datensatzes D von Sensordaten umfassten Szenarios auf.

Das Trainingssteuergerät 1 umfasst ferner Mittel 40 zum Anwenden eines zweiten Algorithmus maschinellen Lernens A2 auf die zweite Augmentation 16 des Datensatzes D von Sensordaten zum Erzeugen einer, insbesondere dimensionsreduzierten, Merkmalsrepräsentation 20 der zweiten Augmentation 16 des Datensatzes D von Sensordaten und zum Bestimmen einer zweiten Klasse K2 eines von der zweiten Augmentation 16 des Datensatzes D von Sensordaten umfassten Szenarios.

Darüber hinaus weist das Trainingssteuergerät 1 Mittel 42 zum Anwenden eines Optimierungsalgorithmus A3 auf die durch den ersten Algorithmus maschinellen Lernens A1 ausgegebene Merkmalsrepräsentation 18 der ersten Augmentation 14 des Datensatzes D von Sensordaten auf, wobei der Optimierungsalgorithmus A3 die durch den zweiten Algorithmus maschinellen Lernens A2 ausgegebene Merkmalsrepräsentation 20 der zweiten Augmentation 16 des Datensatzes D von Sensordaten approximiert.

### Bezugszeichenliste

- 1: Trainingssteuergerät
- 10: Umfelderkennungssensoren
- 12: Ego-Fahrzeug
- 14: erste Augmentation
- 16: zweite Augmentation
- 18, 20: dimensionsreduzierte Merkmalsrepräsentation
- 22, 28: Trajektorien- und/oder Geschwindigkeitsdaten
- 24, 30: Klassen-ID-Daten
- 26, 32: Fahrbahninformationen
- 34, 36: Mittel
- 38, 40: Mittel
- 42: Mittel
- A1: erster Algorithmus maschinellen Lernens
- A2: zweiter Algorithmus maschinellen Lernens
- A3: Optimierungsalgorithmus
- D: Datensatz
- E1: erster Encoder
- E2: zweiter Encoder
- E3: dritter Encoder
- E4: vierter Encoder
- E5: fünfter Encoder
- E6: sechster Encoder
- K1: erste Klasse
- K2: zweite Klasse
- MV1: erster Merkmalsvektor
- MV2: zweiter Merkmalsvektor
- S1-S6: Verfahrensschritte
- S1'-S2': Verfahrensschritte
- V: Ähnlichkeitsverlust

## Patentansprüche

1. Computerimplementiertes Verfahren zum Bereitstellen eines Algorithmus maschinellen Lernens zum Bestimmen ähnlicher Szenarien auf Basis von Szenariendaten eines Datensatzes (D) von Sensordaten, mit den Schritten:
Bereitstellen (S1) des Datensatzes (D) von Sensordaten einer durch eine Mehrzahl fahrzeugseitiger Umfelderkennungsensoren (10) erfassten Fahrt eines Ego-Fahrzeugs (12);
Erzeugen (S2) einer ersten Augmentation (14) des Datensatzes (D) von Sensordaten und einer sich von der ersten Augmentation (14) unterscheidenden zweiten Augmentation (16) des Datensatzes (D) von Sensordaten;
Anwenden (S3) eines ersten Algorithmus maschinellen Lernens (A1) auf die erste Augmentation (14) des Datensatzes (D) von Sensordaten zum Erzeugen einer, insbesondere dimensionsreduzierten, Merkmalsrepräsentation (18) der ersten Augmentation (14) des Datensatzes (D) von Sensordaten und zum Bestimmen (S4) einer ersten Klasse (K1) eines von der ersten Augmentation (14) des Datensatzes (D) von Sensordaten umfassten Szenarios;
Anwenden (S5) eines zweiten Algorithmus maschinellen Lernens (A2) auf die zweite Augmentation (16) des Datensatzes (D) von Sensordaten zum Erzeugen einer, insbesondere dimensionsreduzierten, Merkmalsrepräsentation (20) der zweiten Augmentation (16) des Datensatzes (D) von Sensordaten und zum Bestimmen (S6) einer zweiten Klasse (K2) eines von der zweiten Augmentation (16) des Datensatzes (D) von Sensordaten umfassten Szenarios; und
Anwenden (S7) eines Optimierungsalgorithmus (A3) auf die durch den ersten Algorithmus maschinellen Lernens (A1) ausgegebene Merkmalsrepräsentation (18) der ersten Augmentation (14) des Datensatzes (D) von Sensordaten, wobei der Optimierungsalgorithmus (A3) die durch den zweiten Algorithmus maschinellen Lernens (A2) ausgegebene Merkmalsrepräsentation (20) der zweiten Augmentation (16) des Datensatzes (D) von Sensordaten approximiert, wobei ein Ähnlichkeitsverlust (V) zwischen der durch den ersten Algorithmus maschinellen Lernens (A1) ausgegebenen ersten Klasse (K1) des von der ersten Augmentation (14) des Datensatzes (D) von Sensordaten umfassten Szenarios und der durch den zweiten Algorithmus maschinellen Lernens (A2) ausgegebenen zweiten Klasse (K2) des von der zweiten Augmentation (16) des Datensatzes (D) von Sensordaten umfassten Szenarios durch den Optimierungsalgorithmus (A3) minimiert wird.

2. Computerimplementiertes Verfahren nach Anspruch 1, wobei der erste Algorithmus maschinellen Lernens (A1) einen ersten Encoder (E1), welcher Trajektorien- und/oder Geschwindigkeitsdaten (22) des Ego-Fahrzeugs (12) der ersten Augmentation (14) des Datensatzes (D) von Sensordaten empfängt, einen zweiten Encoder (E2), welcher Trajektorien-, Geschwindigkeits- und/oder Klassen-ID-Daten (24) zumindest eines Objekts der ersten Augmentation (14) des Datensatzes (D) von Sensordaten empfängt und einen dritten Encoder (E3), welcher Fahrbahninformationen (26) der ersten Augmentation (14) des Datensatzes (D) von Sensordaten empfängt, aufweist.

3. Computerimplementiertes Verfahren nach einem der vorhergehenden Ansprüche, wobei der zweite Algorithmus maschinellen Lernens (A2) einen vierten Encoder (E4), welcher Trajektorien- und/oder Geschwindigkeitsdaten (28) des Ego-Fahrzeugs (12) der zweiten Augmentation (16) des Datensatzes (D) von Sensordaten empfängt, einen fünften Encoder (E5), welcher Trajektorien-, Geschwindigkeits- und/oder Klassen-ID-Daten (30) zumindest eines Objekts der zweiten Augmentation (16) des Datensatzes (D) von Sensordaten empfängt und einen sechsten Encoder (E6), welcher Fahrbahninformationen (32) der zweiten Augmentation (16) des Datensatzes (D) von Sensordaten empfängt, aufweist.

4. Computerimplementiertes Verfahren nach Anspruch 2 oder 3, wobei der erste Encoder (E1), der zweite Encoder (E2) und der dritte Encoder (E3) jeweils einen Merkmalsvektor ausgeben, welche zu einem ersten Merkmalsvektor (MV1) konkateniert werden, und wobei der vierte Encoder (E4), der fünfte Encoder (E5) und der sechste Encoder (E6) jeweils einen Merkmalsvektor ausgeben, welche zu einem zweiten Merkmalsvektor (MV2) konkateniert werden.

5. Computerimplementiertes Verfahren nach Anspruch 4, wobei der erste Algorithmus maschinellen Lernens (A1) die erste Klasse (K1) des von der ersten Augmentation (14) des Datensatzes (D) von Sensordaten umfassten Szenarios unter Verwendung des konkatenierten ersten Merkmalsvektors (MV1) bestimmt, und wobei der zweite Algorithmus maschinellen Lernens (A2) die zweite Klasse (K2) des von der zweiten Augmentation (16) des Datensatzes (D) von Sensordaten umfassten Szenarios unter Verwendung des konkatenierten zweiten Merkmalsvektors (MV2) bestimmt.

6. Computerimplementiertes Verfahren nach einem der Ansprüche 2 bis 5, wobei der erste bis sechste Encoder (E1-E6) LSTM-Schichten aufweisen.

7. Computerimplementiertes Verfahren nach einem der Ansprüche 2 bis 6, wobei von dem Datensatz (D) von Sensordaten umfasste Trajektoriendaten (22, 28) des Ego-Fahrzeugs (12) und/oder des Objekts in Abhängigkeit einer Anzahl von Zeitschritten, in denen sich das Objekt in einem Erfassungsbereich der Mehrzahl fahrzeugseitiger Umfelderkennungsensoren (10) befindet, jeweils eine unterschiedliche Merkmalsgröße aufweisen.

8. Computerimplementiertes Verfahren nach Anspruch 7, wobei der erste Algorithmus maschinellen Lernens (A1) und der zweite Algorithmus maschinellen Lernens (A2) zur Verarbeitung der von dem Datensatz (D) von Sensordaten umfassten Trajektoriendaten (22, 28) des Ego-Fahrzeugs (12) und/oder des Objekts Ragged-Tensoren verwenden.

9. Computerimplementiertes Verfahren nach einem der vorhergehenden Ansprüche, wobei die erste Augmentation (14) und die zweite Augmentation (16) zum Erstellen unterschiedlicher Varianten des Datensatzes (D) von Sensordaten zufällig erzeugt sind.

10. Computerimplementiertes Verfahren nach einem der vorhergehenden Ansprüche, wobei die Szenarien Fahrmanöver des Ego-Fahrzeugs (12) und/oder eines Fellow-Fahrzeugs und/oder Interaktionsmanöver des Ego-Fahrzeugs (12) mit dem Fellow-Fahrzeug und/oder weiterer Objekte aufweisen.

11. Computerimplementiertes Verfahren nach Anspruch 2, wobei die Trajektorien- und/oder Geschwindigkeitsdaten (22, 28) des Ego-Fahrzeugs (12) durch einen GPS-Sensor erfasst werden, und wobei die Trajektorien-, Geschwindigkeits- und/oder Klassen-ID-Daten (24, 30) des zumindest eines Objekts sowie die Fahrbahninformationen durch einen Kamera-, LiDAR- und/oder Radarsensor erfasst werden.

12. Computerimplementiertes Verfahren zum Bestimmen ähnlicher Szenarien auf Basis von Szenariendaten eines Datensatzes (D) von Sensordaten, mit den Schritten:
Bereitstellen (S1') des Datensatzes (D) von Sensordaten einer durch eine Mehrzahl fahrzeugseitiger Umfelderkennungsensoren (10) erfassten Fahrt eines Ego-Fahrzeugs (12); und
Anwenden (S2') eines nach einem der Ansprüche 1 bis 11 trainierten Algorithmus maschinellen Lernens auf den Datensatz (D) von Sensordaten zum Bestimmen, insbesondere Clustern, ähnlicher Szenarien.

13. Trainingssteuergerät (1) zum Bereitstellen eines Algorithmus maschinellen Lernens zum Bestimmen ähnlicher Szenarien auf Basis von Szenariendaten eines Datensatzes (D) von Sensordaten, umfassend:
Mittel (34) zum Empfangen des Datensatzes (D) von Sensordaten einer durch eine Mehrzahl fahrzeugseitiger Umfelderkennungsensoren (10) erfassten Fahrt eines Ego-Fahrzeugs (12);
Mittel (36) zum Erzeugen einer ersten Augmentation (14) des Datensatzes (D) von Sensordaten und einer sich von der ersten Augmentation (14) unterscheidenden zweiten Augmentation (16) des Datensatzes (D) von Sensordaten;
Mittel (38) zum Anwenden eines ersten Algorithmus maschinellen Lernens (A1) auf die erste Augmentation (14) des Datensatzes (D) von Sensordaten zum Erzeugen einer, insbesondere dimensionsreduzierten, Merkmalsrepräsentation (18) der ersten Augmentation (14) des Datensatzes (D) von Sensordaten und zum Bestimmen einer ersten Klasse (K1) eines von der ersten Augmentation (14) des Datensatzes (D) von Sensordaten umfassten Szenarios;
Mittel (40) zum Anwenden eines zweiten Algorithmus maschinellen Lernens (A2) auf die zweite Augmentation (16) des Datensatzes (D) von Sensordaten zum Erzeugen einer, insbesondere dimensionsreduzierten, Merkmalsrepräsentation (20) der zweiten Augmentation (16) des Datensatzes (D) von Sensordaten und zum Bestimmen einer zweiten Klasse (K2) eines von der zweiten Augmentation (16) des Datensatzes (D) von Sensordaten umfassten Szenarios; und
Mittel (42) zum Anwenden eines Optimierungsalgorithmus (A3) auf die durch den ersten Algorithmus maschinellen Lernens (A1) ausgegebene Merkmalsrepräsentation (18) der ersten Augmentation (14) des Datensatzes (D) von Sensordaten, wobei der Optimierungsalgorithmus (A3) die durch den zweiten Algorithmus maschinellen Lernens (A2) ausgegebene Merkmalsrepräsentation (20) der zweiten Augmentation (16) des Datensatzes (D) von Sensordaten approximiert,
wobei ein Ähnlichkeitsverlust (V) zwischen der durch den ersten Algorithmus maschinellen Lernens (A1) ausgegebenen ersten Klasse (K1) des von der ersten Augmentation (14) des Datensatzes (D) von Sensordaten umfassten Szenarios und der durch den zweiten Algorithmus maschinellen Lernens (A2) ausgegebenen zweiten Klasse (K2) des von der zweiten Augmentation (16) des Datensatzes (D) von Sensordaten umfassten Szenarios durch den Optimierungsalgorithmus (A3) minimiert wird.

14. Computerprogramm mit Programmcode, um das Verfahren nach einem der Ansprüche 1 bis 11 durchzuführen, wenn das Computerprogramm auf einem Computer ausgeführt wird.

## Claims

1. A computer-implemented method for providing a machine learning algorithm for determining similar scenarios based on scenario data of a data set (D) of sensor data, comprising the steps of:
providing (S1) the data set (D) of sensor data of a journey of an ego vehicle (12) detected by a plurality of vehicle-side environment detection sensors (10);
generating (S2) a first augmentation (14) of the data set (D) of sensor data and a second augmentation (16) of the data set (D) of sensor data different from the first augmentation (14);
applying (S3) a first machine learning algorithm (A1) to the first augmentation (14) of the data set (D) of sensor data for generating a feature representation (18), in particular of reduced dimensions, of the first augmentation (14) of the data set (D) of sensor data and for determining (S4) a first class (K1) of a scenario comprised by the first augmentation (14) of the data set (D) of sensor data;
applying (S5) a second machine learning algorithm (A2) to the second augmentation (16) of the data set (D) of sensor data for generating a feature representation (20), in particular of reduced dimensions, of the second augmentation (16) of the data set (D) of sensor data and for determining (S6) a second class (K2) of a scenario comprised by the second augmentation (16) of the data set (D) of sensor data; and
applying (S7) an optimization algorithm (A3) to the feature representation (18) of the first augmentation (14) of the data set (D) of sensor data output by the first machine learning algorithm (A1), wherein the optimization algorithm (A3) approximates the feature representation (20) of the second augmentation (16) of the data set (D) of sensor data output by the second machine learning algorithm (A2), wherein a similarity loss (V) between the first class (K1) of the scenario comprised by the first augmentation (14) of the data set (D) of sensor data output by the first machine learning algorithm (A1) and the second class (K2) of the scenario comprised by the second augmentation (16) of the data set (D) of sensor data output by the second machine learning algorithm (A2) is minimized by the optimization algorithm (A3).

2. The computer-implemented method according to claim 1, wherein the first machine learning algorithm (A1) has a first encoder (E1) receiving trajectory and/or velocity data (22) of the ego vehicle (12) of the first augmentation (14) of the data set (D) of sensor data, a second encoder (E2) receiving trajectory, velocity, and/or class ID data (24) of at least one object of the first augmentation (14) of the data set (D) of sensor data, and a third encoder (E3) receiving lane information (26) of the first augmentation (14) of the data set (D) of sensor data.

3. The computer-implemented method according to any one of the preceding claims, wherein the second machine learning algorithm (A2) has a fourth encoder (E4) receiving trajectory and/or velocity data (28) of the ego vehicle (12) of the second augmentation (16) of the data set (D) of sensor data, a fifth encoder (E5) receiving trajectory, velocity, and/or class ID data (30) of at least one object of the second augmentation (16) of the data set (D) of sensor data, and a sixth encoder (E6) receiving lane information (32) of the second augmentation (16) of the data set (D) of sensor data.

4. The computer-implemented method according to claim 2 or 3, wherein the first encoder (E1), the second encoder (E2), and the third encoder (E3) each output a feature vector and said vectors are concatenated to form a first feature vector (MVl), and wherein the fourth encoder (E4), the fifth encoder (E5), and the sixth encoder (E6) each output a feature vector and said vectors are concatenated to form a second feature vector (MV2).

5. The computer-implemented method according to claim 4, wherein the first machine learning algorithm (A1) determines the first class (K1) of the scenario comprised by the first augmentation (14) of the data set (D) of sensor data using the concatenated first feature vector (MVl), and wherein the second machine learning algorithm (A2) determines the second class (K2) of the scenario comprised by the second augmentation (16) of the data set (D) of sensor data using the concatenated second feature vector (MV2).

6. The computer-implemented method according to any one of claims 2 to 5, wherein the first to sixth encoders (E1-E6) have LSTM layers.

7. The computer-implemented method according to any one of claims 2 to 6, wherein trajectory data (22, 28) of the ego vehicle (12) and/or of the object comprised by the data set (D) of sensor data each have a different feature size depending on a number of time steps in which the object is present in a detection range of the plurality of vehicle-side environment detection sensors (10).

8. The computer-implemented method according to claim 7, wherein the first machine learning algorithm (A1) and the second machine learning algorithm (A2) use ragged tensors for processing the trajectory data (22, 28) of the ego vehicle (12) and/or of the object comprised by the data set (D) of sensor data.

9. The computer-implemented method according to any one of the preceding claims, wherein the first augmentation (14) and the second augmentation (16) are randomly generated for creating different variants of the data set (D) of sensor data.

10. The computer-implemented method according to any one of the preceding claims, wherein the scenarios comprise driving maneuvers of the ego vehicle (12) and/or of a fellow vehicle and/or interaction maneuvers of the ego vehicle (12) with the fellow vehicle and/or further objects.

11. The computer-implemented method according to claim 2, wherein the trajectory and/or velocity data (22, 28) of the ego vehicle (12) is detected by a GPS sensor, and wherein the trajectory, velocity, and/or class ID data (24, 30) of the at least one object as well as the lane information is acquired by a camera, LiDAR, and/or radar sensor.

12. A computer-implemented method for determining similar scenarios based on scenario data of a data set (D) of sensor data, comprising the steps of:
providing (S1') the data set (D) of sensor data of a journey of an ego vehicle (12) detected by a plurality of vehicle-side environment detection sensors (10); and
applying (S2') a machine learning algorithm trained according to any one of claims 1 to 11 to the data set (D) of sensor data for determining, in particular clustering, similar scenarios.

13. A training controller (1) for providing a machine learning algorithm for determining similar scenarios based on scenario data of a data set (D) of sensor data, comprising:
means (34) for receiving the data set (D) of sensor data of a journey of an ego vehicle (12) detected by a plurality of vehicle-side environment detection sensors (10);
means (36) for generating a first augmentation (14) of the data set (D) of sensor data and a second augmentation (16) of the data set (D) of sensor data different from the first augmentation (14);
means (38) for applying a first machine learning algorithm (A1) to the first augmentation (14) of the data set (D) of sensor data for generating a feature representation (18), in particular of reduced dimensions, of the first augmentation (14) of the data set (D) of sensor data and for determining a first class (K1) of a scenario comprised by the first augmentation (14) of the data set (D) of sensor data;
means (40) for applying a second machine learning algorithm (A2) to the second augmentation (16) of the data set (D) of sensor data for generating a feature representation (20), in particular of reduced dimensions, of the second augmentation (16) of the data set (D) of sensor data and for determining a second class (K2) of a scenario comprised by the second augmentation (16) of the data set (D) of sensor data; and
means (42) for applying an optimization algorithm (A3) to the feature representation (18) of the first augmentation (14) of the data set (D) of sensor data output by the first machine learning algorithm (A1), wherein the optimization algorithm (A3) approximates the feature representation (20) of the second augmentation (16) of the data set (D) of sensor data output by the second machine learning algorithm (A2),
wherein a similarity loss (V) between the first class (K1) of the scenario comprised by the first augmentation (14) of the data set (D) of sensor data output by the first machine learning algorithm (A1) and the second class (K2) of the scenario comprised by the second augmentation (16) of the data set (D) of sensor data output by the second machine learning algorithm (A2) is minimized by the optimization algorithm (A3).

14. A computer program comprising program code for performing the method according to any one of claims 1 through 11 when the computer program is executed on a computer.

## Revendications

1. Procédé mis en œuvre par ordinateur pour fournir un algorithme d'apprentissage automatique destiné à déterminer des scénarios similaires sur la base de données de scénarios d'un ensemble de données (D) de données de capteurs, comprenant les étapes suivantes:
fourniture (S1) de l'ensemble de données (D) de données de capteurs d'un déplacement d'un véhicule autonome et connecté (12) détecté par une pluralité de capteurs de reconnaissance de l'environnement (10) côté véhicule;
génération (S2) d'une première augmentation (14) de l'ensemble de données (D) de données de capteurs et d'une deuxième augmentation (16) de l'ensemble de données (D) de données de capteurs, différente de la première augmentation (14);
application (S3) d'un premier algorithme d'apprentissage automatique (A1) à la première augmentation (14) de l'ensemble de données (D) de données de capteurs afin de générer une représentation de caractéristiques (18), en particulier à dimensions réduites, de la première augmentation (14) de l'ensemble de données (D) de données de capteurs et de déterminer (S4) une première classe (K1) d'un scénario compris dans la première augmentation (14) de l'ensemble de données (D) de données de capteurs;
application (S5) d'un deuxième algorithme d'apprentissage automatique (A2) à la deuxième augmentation (16) de l'ensemble de données (D) de données de capteurs afin de générer une représentation de caractéristiques (20), en particulier à dimensions réduites, de la deuxième augmentation (16) de l'ensemble de données (D) de données de capteurs et de déterminer (S6) une deuxième classe (K2) d'un scénario compris dans la deuxième augmentation (16) de l'ensemble de données (D) de données de capteurs; et
application (S7) d'un algorithme d'optimisation (A3) à la représentation de caractéristiques (18) de la première augmentation (14) de l'ensemble de données (D) de données de capteurs délivrée par le premier algorithme d'apprentissage automatique (A1), l'algorithme d'optimisation (A3) approximant la représentation de caractéristiques (20) de la deuxième augmentation (16) de l'ensemble de données (D) de données de capteurs délivrée par le deuxième algorithme d'apprentissage automatique (A2), une perte de similitude (V) entre la première classe (K1), délivrée par le premier algorithme d'apprentissage automatique (A1), du scénario compris dans la première augmentation (14) de l'ensemble de données (D) de données de capteurs et la deuxième classe (K2), délivrée par le deuxième algorithme d'apprentissage automatique (A2), du scénario compris dans la deuxième augmentation (16) de l'ensemble de données (D) de données de capteurs étant minimisée par l'algorithme d'optimisation (A3).

2. Procédé mis en œuvre par ordinateur selon la revendication 1, le premier algorithme d'apprentissage automatique (A1) comprenant un premier codeur (E1) qui reçoit des données de trajectoire et/ou de vitesse (22) du véhicule autonome et connecté (12) de la première augmentation (14) de l'ensemble de données (D) de données de capteurs, un deuxième codeur (E2) qui reçoit des données de trajectoire, de vitesse et/ou d'identifiant de classe (24) d'au moins un objet de la première augmentation (14) de l'ensemble de données (D) de données de capteurs et un troisième codeur (E3) qui reçoit des informations de chaussée (26) de la première augmentation (14) de l'ensemble de données (D) de données de capteurs.

3. Procédé mis en œuvre par ordinateur selon l'une quelconque des revendications précédentes, le deuxième algorithme d'apprentissage automatique (A2) comprenant un quatrième codeur (E4) qui reçoit des données de trajectoire et/ou de vitesse (28) du véhicule autonome et connecté (12) de la deuxième augmentation (16) de l'ensemble de données (D) de données de capteurs, un cinquième codeur (E5) qui reçoit des données de trajectoire, de vitesse et/ou d'identifiant de classe (30) d'au moins un objet de la deuxième augmentation (16) de l'ensemble de données (D) de données de capteurs et un sixième codeur (E6) qui reçoit des informations de chaussée (32) de la deuxième augmentation (16) de l'ensemble de données (D) de données de capteurs.

4. Procédé mis en œuvre par ordinateur selon la revendication 2 ou 3, le premier codeur (E1), le deuxième codeur (E2) et le troisième codeur (E3) délivrant respectivement un vecteur de caractéristiques, lesquels sont concaténés en un premier vecteur de caractéristiques (MV1), et le quatrième codeur (E4), le cinquième codeur (E5) et le sixième codeur (E6) délivrant respectivement un vecteur de caractéristiques, lesquels sont concaténés en un deuxième vecteur de caractéristiques (MV2).

5. Procédé mis en œuvre par ordinateur selon la revendication 4, le premier algorithme d'apprentissage automatique (A1) déterminant la première classe (K1) du scénario compris dans la première augmentation (14) de l'ensemble de données (D) de données de capteurs par utilisation du premier vecteur de caractéristiques (MV1) concaténé, et le deuxième algorithme d'apprentissage automatique (A2) déterminant la deuxième classe (K2) du scénario compris dans la deuxième augmentation (16) de l'ensemble de données (D) de données de capteurs par utilisation du deuxième vecteur de caractéristiques (MV2) concaténé.

6. Procédé mis en œuvre par ordinateur selon l'une quelconque des revendications 2 à 5, les premier à sixième codeurs (E1-E6) comportant des couches LSTM.

7. Procédé mis en œuvre par ordinateur selon l'une quelconque des revendications 2 à 6, des données de trajectoire (22, 28) du véhicule autonome et connecté (12) et/ou de l'objet, comprises dans l'ensemble de données (D) des données de capteurs, présentant respectivement une grandeur de caractéristique différente en fonction d'un nombre de pas de temps pendant lesquels l'objet se trouve dans une zone de détection de la pluralité de capteurs de reconnaissance de l'environnement (10) côté véhicule.

8. Procédé mis en œuvre par ordinateur selon la revendication 7, le premier algorithme d'apprentissage automatique (A1) et le deuxième algorithme d'apprentissage automatique (A2) utilisant des tenseurs décalés pour traiter les données de trajectoire (22, 28) du véhicule autonome et connecté (12) et/ou de l'objet comprises dans l'ensemble de données (D) de données de capteurs.

9. Procédé mis en œuvre par ordinateur selon l'une quelconque des revendications précédentes, la première augmentation (14) et la deuxième augmentation (16) étant générées de manière aléatoire afin de créer différentes variantes de l'ensemble de données (D) de données de capteurs.

10. Procédé mis en œuvre par ordinateur selon l'une quelconque des revendications précédentes, les scénarios comprenant des manœuvres de conduite du véhicule autonome et connecté (12) et/ou d'un véhicule compagnon et/ou des manœuvres d'interaction du véhicule autonome et connecté (12) avec le véhicule compagnon et/ou d'autres objets.

11. Procédé mis en œuvre par ordinateur selon la revendication 2, les données de trajectoire et/ou de vitesse (22, 28) du véhicule autonome et connecté (12) étant acquises par un capteur GPS, et les données de trajectoire, de vitesse et/ou d'identifiant de classe (24, 30) de l'au moins un objet ainsi que les informations de chaussée étant acquises par un capteur de caméra, LiDAR et/ou radar.

12. Procédé mis en œuvre par ordinateur pour destiné à déterminer des scénarios similaires sur la base de données de scénarios d'un ensemble de données (D) de données de capteurs, comprenant les étapes suivantes:
fourniture (S1') de l'ensemble de données (D) de données de capteurs d'un déplacement d'un véhicule autonome et connecté (12) détecté par une pluralité de capteurs de reconnaissance de l'environnement (10) côté véhicule; et
application (S2') d'un algorithme d'apprentissage automatique entraîné selon l'une quelconque des revendications 1 à 11 à l'ensemble de données (D) de données de capteurs pour déterminer, en particulier regrouper, des scénarios similaires.

13. Appareil de commande d'entraînement (1) pour fournir un algorithme d'apprentissage automatique destiné à déterminer des scénarios similaires sur la base de données de scénario d'un ensemble de données (D) de données de capteurs, comprenant:
des moyens (34) pour recevoir l'ensemble de données (D) de données de capteurs d'un déplacement d'un véhicule autonome et connecté (12) détecté par une pluralité de capteurs de reconnaissance de l'environnement (10) côté véhicule;
des moyens (36) pour générer une première augmentation (14) de l'ensemble de données (D) de données de capteurs et une deuxième augmentation (16) de l'ensemble de données (D) de données de capteurs différente de la première augmentation (14);
des moyens (38) pour appliquer un premier algorithme d'apprentissage automatique (A1) à la première augmentation (14) de l'ensemble de données (D) de données de capteurs afin de générer une représentation de caractéristiques (18), en particulier à dimensions réduites, de la première augmentation (14) de l'ensemble de données (D) de données de capteurs, et déterminer une première classe (K1) d'un scénario compris dans la première augmentation (14) de l'ensemble de données (D) de données de capteurs;
des moyens (40) pour appliquer un deuxième algorithme d'apprentissage automatique (A2) à la deuxième augmentation (16) de l'ensemble de données (D) de données de capteurs afin de générer une représentation de caractéristiques (20), en particulier à dimensions réduites, de la deuxième augmentation (16) de l'ensemble de données (D) de données de capteurs, et déterminer une deuxième classe (K2) d'un scénario compris dans la deuxième augmentation (16) de l'ensemble de données (D) de données de capteurs; et
des moyens (42) pour appliquer un algorithme d'optimisation (A3) à la représentation de caractéristiques (18) de la première augmentation (14) de l'ensemble de données (D) de données de capteurs délivrée par le premier algorithme d'apprentissage automatique (A1), l'algorithme d'optimisation (A3) approximant la représentation de caractéristiques (20) de la deuxième augmentation (16) de l'ensemble de données (D) de données de capteurs délivrée par le deuxième algorithme d'apprentissage automatique (A2),
une perte de similitude (V) entre la première classe (K1), délivrée par le premier algorithme d'apprentissage automatique (A1), du scénario compris dans la première augmentation (14) de l'ensemble de données (D) de données de capteurs et la deuxième classe (K2), délivrée par le deuxième algorithme d'apprentissage automatique (A2), du scénario compris dans la deuxième augmentation (16) de l'ensemble de données (D) de données de capteurs, étant minimisée par l'algorithme d'optimisation (A3).

14. Programme informatique comprenant un code de programme pour mettre en œuvre le procédé selon l'une quelconque des revendications 1 à 11 lorsque le programme informatique est exécuté sur un ordinateur.
